(19) Europäisches Patentamt / European Patent Office / Office européen des brevets

(11) **EP 3 041 186 A1**

(12) **EUROPEAN PATENT APPLICATION**

(43) Date of publication:
**06.07.2016 Bulletin 2016/27**

(51) Int Cl.:
*H04L 29/06* (2006.01)   *H04L 9/32* (2006.01)

(21) Application number: **14307227.0**

(22) Date of filing: **31.12.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **GEMALTO SA
92190 Meudon (FR)**

(72) Inventors:
• **Krizenecky, Milan
13881 GEMENOS CEDEX (FR)**
• **Webster, Michael
13881 GEMENOS CEDEX (FR)**

(54) **Method and device for associating two credentials relating to a user**

(57)    The invention relates to a method 20 for associating two credentials relating to a user.

According to the invention, a first device 14 accesses a first application 12. The first application accesses a first private key, as a first user credential. The method comprises the following steps. The first application gets a corresponding first public key. The first application sends to a second application 16 a message 24 including the first public key. The second application signs 26 the first public key by using a second private key, as a second user credential, a result being a first signature. The second application sends to a signature verification entity a first message 28 including the first public key and the first signature. The signature verification entity accesses a second public key associated with the second private key. The signature verification entity verifies 210 whether the first signature is or is not valid. Only if the first signature is valid, then the signature verification entity sends to a certificate authority a second message 214 including a corresponding certificate request relating to the first user credential. And the certificate authority generates 216 a certificate relating to the first user credential.

The invention also relates to a corresponding device 16.

Fig. 2

EP 3 041 186 A1

**Description**

**Field of the invention:**

The invention relates generally to a method for associating two credentials relating to a user.

Furthermore, the invention also pertains to a device for associating two credentials relating to a user.

The device may be an electronic IDentity card (or eID card) that is an identity card, as a Secure Element (or SE), that allows identifying its user to one (or several) authority(ies) to give access to a service(s), like e.g. a government service(s) and/or a bank service(s).

The device may be a terminal, a user terminal, an embedded chip or a smart card, as an SE.

Within the present description, an SE is a smart object or device that includes a chip that protects, as a tamper resistant component, physically access to stored data and is intended to communicate, preferably in a secure manner, data with the outside world, like e.g. a mobile (tele)phone, as an SE host device.

**State of the art:**

As known per se, an individual enrols to a server by using her/his base identity that identifies the individual. The individual owns a Subscriber Identity Module (or SIM) card. The SIM card generates a private key and a corresponding public key. The SIM card sends to the server the Public Key Infrastructure (or PKI) based public key. The server registers the base identity, as a first user credential, and the corresponding derived identity, as a derived and second user credential. The server has a virtual and "soft" link, i.e. a process based link, between the first and the second user credential.

However, such a virtual link is managed at a server level and may be considered as not strong enough, so as to trust the second user credential.

Thus, there is a need to provide a solution that allows increasing the strength of the link between the first and the second user credential.

**Summary of the invention:**

The invention proposes a solution for satisfying the just herein above specified need by providing a method for associating two credentials relating to a user.

According to the invention, a first device accesses a first application. The first application accesses a first private key, as a first user credential. The method comprises the following steps. The first application gets a corresponding first public key. The first application sends to a second application a message including the first public key. The second application signs the first public key by using a second private key, as a second user credential, a result being a first signature. The second application sends to a signature verification entity a first message including the first public key and the first signature. The signature verification entity accesses a second public key associated with the second private key. The signature verification entity verifies whether the first signature is or is not valid. Only if the first signature is valid, then the signature verification entity sends to a certificate authority a second message including a corresponding certificate request relating to the first user credential. And the certificate authority generates a certificate relating to the first user credential.

The principle of the invention consists in that a first application supported by a first device issues a first public key, as a first user credential, that is signed, through a second application, by using a second private key, as a second user credential, and, when a resulting first signature is successfully verified, a Certificate Authority (or CA) certifies either the first user credential or the first signature.

It is noteworthy that the first and the second application may be supported by only one device, namely the first device, or two devices, namely the first device and a second device respectively.

The first public key, as a first user credential, is signed by using the second private key, as a second user credential. The first signature therefore links cryptographically the first and second user credentials.

From a PKI perspective, the second application acts as a CA that certifies the first user credential.

Thus, the invention solution allows generating, at a user device side, a cryptography based link between the first and the second user credential.

Contrary to the aforementioned prior art solution, the invention solution link between the first and the second user credential is generated at a user device level and is based on cryptography. The invention solution link between the first and the second user credential is therefore stronger than the corresponding link obtained with the prior art solution.

The CA may certify the first user credential or the first signature, as the cryptographic link between the first and second user credentials.

Due to the fact that a certificate is only generated when the first signature is valid, the certificate is securely issued and therefore trustable.

The invention solution cryptography based link between the user credentials allows gaining a higher level of trust than the one gained with the aforementioned prior art solution virtual link between the user credentials.

The proposed invention solution may be automatic. The proposed invention solution does not need to involve a user and is therefore convenient for the user.

According to a further aspect, the invention is a device for associating two credentials relating to a user.

According to the invention, the device comprises means for storing a second application. The second application is configured to receive from a first application a message including a first public key, as a first user credential. The second application is configured to sign the first public key by using a second private key, as a second user credential, a result being a first signature. The second application is configured to send to a signature verification entity a first message including the first public key and the first signature.

As device, it may be any electronic device comprising data processing means, data storing means and one or several Input/Output (or I/O) communication interfaces.

The device may be a terminal, a user terminal or an SE.

As a user terminal, it may be, for instance, a mobile (tele)phone, a tablet, a game console, a netbook, a Personal Digital Assistant (or PDA), a Personal Computer (or PC), a mobile laptop and/or an electronic mobile equipment (e.g.: glasses, a watch or a jewel).

The invention does not impose any constraint as to a kind of the SE type.

As a removable SE, it may be a SIM type card, a Secure Removable Module (or SRM), a smart dongle of the USB (acronym for "Universal Serial Bus") type, a (micro-) Secure Digital (or SD) type card, a Multi-Media type Card (or MMC) or any other format card to be coupled or connected to a host device, like e.g. a terminal.

Instead of a removable SE, the SE may be embedded, like e.g. an embedded Universal Integrated Circuit Card (or eUICC), as a chip incorporated within a host device, such as a user terminal.

**Brief description of the drawings:**

Additional features and advantages of the invention will be more clearly understandable after reading a detailed description of one preferred embodiment of the invention, given as an indicative and non-limitative example, in conjunction with the following drawings:

- Figure 1 illustrates a simplified scheme of a chip comprised within a user terminal, an electronic IDentity (or eID) card, as one exemplary embodiment of a device for associating two user credentials, a server and a CA, the eID card being arranged to receive from the chip a first public key, as a first user credential, and to sign it with a second private key, as a second user credential, and to send to a server the first public key and a resulting first signature, as a cryptographic link between the two user credentials, according to the invention;
- Figure 2 represents an example of one message flow between the chip, the eID card, the server and the CA of figure 1, so that, when the first signature is successfully verified by the server, the CA certifies the first public key or the corresponding first signature; and
- Figure 3 is a simplified diagram of a first and a second resulting trust chain that relate to the eID card and the chip of figure 1 respectively, so that the two resulting trust chains are both linked due to the generated cryptographic link between the first and second user credentials.

**Detailed description:**

Herein under is considered a case in which the invention method for associating two credentials relating to a user is implemented by a chip, as a first SE, embedded within a user terminal, as a first device, and a ConTact-Less (or CTL) eID card, as a second SE and a second device, a server, as a signature verification entity, and a CA.

According to such a described embodiment, at the client side, the first device cooperates with, on the one hand, the first SE, so as to issue a first public key, as a first user credential, and, on the other hand, the second SE, so as to issue a signed first public key by using a second private key, as a second user credential.

According to another embodiment (not represented), the invention method for associating two credentials relating to a user is implemented, at the client side, by a standalone first device, i.e. a first device that does not cooperate with any other device, irrespective of whether the first device type is a terminal, a user terminal or an SE.

Naturally, the herein below described embodiment is only for exemplifying purposes and is not considered to reduce the scope of the invention.

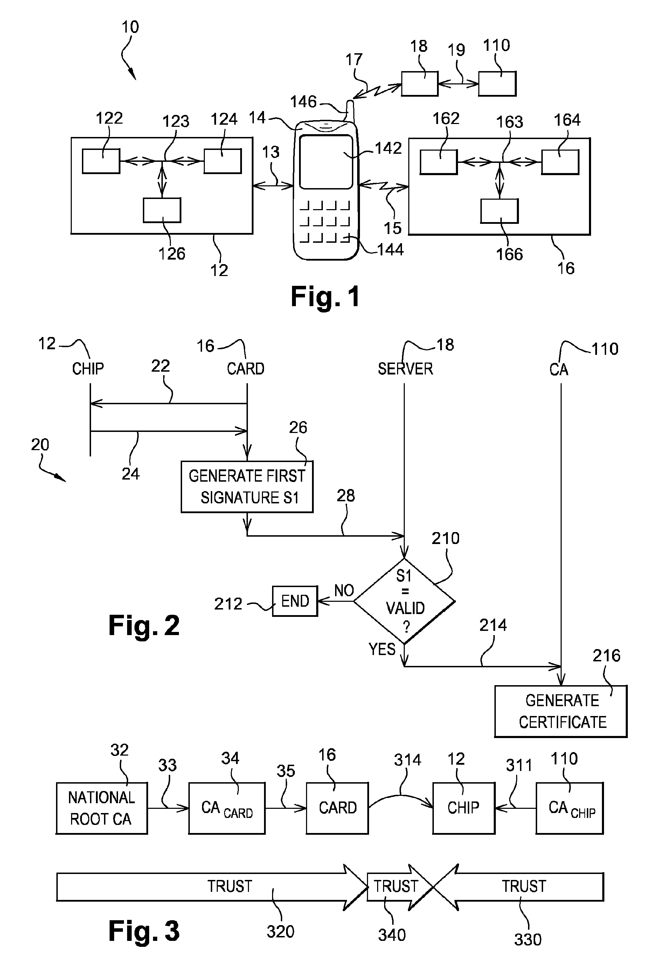

**Figure 1** shows schematically a system 10 that includes, at a client side, a chip 12 soldered to a Printed Circuit Board (or PCB) of a mobile phone 14, as a user terminal, and a CTL eID card 16, and, at a server side, a remote server 18, as a signature verification entity, and a CA 110.

Within the present description, the adjective "ConTact-Less" used within the expression "ConTact-Less eID card" means notably that the eID card communicates via a Short Range (or SR) Radio-Frequency (or RF) link by using, for instance, International Standardization Organization/ International Electro-technical Commission (or ISO/IEC) 14 443 specifications, a Ultra High Frequency Radio-Frequency IDentification (or UHF RFID), a Near Field Communication (or NFC) type technology or the like.

For sake of simplicity, the chip 12, the mobile phone 14, the CTL eID card 16 and the remote server 18 are termed infra the SE1 12, the phone 14, the SE2 16 and the server 18 respectively.

Only one user terminal 14 with two SEs 12 and 16 are represented at a client side. Nevertheless, the invention is also applicable to several user terminals with none, one or two SEs, at client side.

Likewise, only one server and one CA are represented at a server side. However, the invention is still applicable to several servers and several CAs, at server side.

The system 10 performs, when applicable, a (digital) certificate generation that involves mainly:

- the SE1 12 that carries out an issue of a first public key;
- the SE2 16 that carries out a generation of a (digital) signature of the first public key;
- the server 18 that carries out a (digital) signature verification; and
- the CA 110 that carries out, only when the signature has been successfully verified, an issue of a (digital) certificate relating to the first public key or its signature.

The phone 14 is, for instance, an NFC enabled phone 14, as a first device, so that the SE2 is able to interact with the SE1 and the phone 14.

The phone 14 incorporates the SE1 12.

Alternately, instead of using the SE1 12, the phone 14 stores, within its own memory (not represented), data stored within the SE1 12 as described infra.

The SE1 12 belongs to a phone 14 user, as a subscriber to a mobile radio-communication network (not represented) and a phone 14 owner.

The SE1 12 includes one (or several) microprocessor(s) 122, as data processing means, one (or several) memory(ies) 124, as data storing means, and one (or several) I/O interface(s) 126 that are internally all connected, through an internal bidirectional data bus 123, to each other.

The I/O interface(s) 126 allow(s) communicating data from the internal chip components to the chip exterior and conversely.

The microprocessor(s) 122 processe(s), control(s) and communicate(s) internally data with all the other components incorporated within the SE1 12 and, through the I/O interface(s) 126, with the chip exterior.

The (or each) microprocessor 122 executes an Operating System (or OS) and one or several applications.

The microprocessor 122 executes, in a preferred manner, one or several security applications.

The security applications include preferably a user authentication process to be used prior to accessing the memory 124. To authenticate successfully the user, the user has to provide a Personal Identity Number (or PIN), biometric data and/or the like, as user reference authentication data that is securely stored within the memory 124, that has to match the user reference authentication data.

The microprocessor 122 is preferably able to initiate actions, in order to interact directly with the outside world, in an independent manner of the SE1 hosting device. Such a capacity of interaction at the initiative of the SE1 12 is also known as a proactive capacity. The SE1 12 plays thus a role of a master while the SE1 hosting device plays a role of a slave.

The SE1 12 is thus able to send, at its own initiative, through the phone 14, to any device connected to the phone 14, a proactive command for sending, for instance, to the mobile network data for triggering an authentication mechanism, so as to be authenticated to the mobile network.

The memory 124 stores preferably data relating to one or several wireless services.

The memory 124 stores, preferably in a secure manner, a set of data relating, each, to a subscription to a network(s).

Each set of data, as wireless service data, relating to one subscription to one (or several) network(s) includes:

- an International Mobile Subscriber Identity (or IMSI), as a subscriber and a service subscription identifier for accessing a network;
- a key Ki, as an authentication key, allowing to authenticate the concerned subscriber to the concerned network;
- Milenage, as an authentication algorithm, allowing to authenticate the concerned subscriber to the concerned network;
- one or several passwords, like e.g. a PIN, biometric data and/or one or several cryptographic algorithm(s), as data relating to secret(s);
- a file system including one or several Elementary Files (or EF);

- one or several security keys, like e.g. a key(s) for encrypting/decrypting data and/or a key(s) for signing data a key(s);
- one or several applicative keys, like e.g. a key for accessing a user bank account through the mobile radio-communication network; and/or
- one or several credentials, like e.g. a user name and/or an IDentifier (or ID) of the subscriber, as data relating to the user.

The memory 124 stores preferably one (or several) SIM type application(s).

The SIM type application(s) includes, among others, a SIM application for a Global System for Mobile communication (or GSM) type network, a Universal Subscriber Identity Module (or USIM) application for a Universal Mobile Telecommunications System (or UMTS) type network, a Code Division Multiple Access (or CDMA) Subscriber Identity Module (or CSIM) application and/or an Internet protocol Multimedia Subsystem (or IMS) Subscriber Identity Module (or ISIM) application.

The SIM type application(s) allow(s) the SE1 hosting device, like e.g. the phone 14, to authenticate to one (or several) network(s) (not represented) by using the one (or several) subscription identifier, like e.g. a first subscription IMSI1, and a corresponding network authentication, like e.g. Ki1.

The memory 124 may have either been pre-provisioned, during the SE1 personalization (i.e. preferably at the end of its manufacturing process) and/or after the

SE1 issuance upon a preferably secure load or download, as a post-issuance personalization, with at least one first private key denoted K1pr or dynamically generated the first private key K1pr.

Likewise, the memory 124 may have either been pre-provisioned, during the SE1 manufacturing and/or after the SE1 issuance upon a load or download, with at least one corresponding first public key denoted K1 pub or dynamically generated the first public key K1 pub, as a first user credential.

According to an essential feature of the invention, the memory 124 stores the first public key K1 pub that is associated with the first private K1pr. The first private key K1 pr and the associated first public key K1 pub constitute a first asymmetric key-pair.

Alternatively, instead of being stored within the SE1 12, the first public key K1 pub is stored within the phone 14.

The microprocessor 122 executes an invention derived credential issuer, as a first application.

Alternatively, instead of being supported by the SE1 12, the phone 14 supports the first application.

An execution of the first application is preferably configured to be triggered when receiving a request for deriving a credential. Such a request may include information about another user credential, as a second user credential. The information may include user data, like e.g. a user name, a social security number, as a user identifier(s).

The SE1 12 is connected, through a bi-directional contact link 13, to the phone 14.

The phone 14 is preferably able to interact with the SE1 12, so as to identify and authenticate, in particular, to the network.

The phone 14 is preferably provided with a display screen 142 and a keyboard 144, as Man Machine Interface (or MMI). The MMI allows the phone user to interact with the phone 14 and preferably the SE1 12 and the SE2 16.

Alternately, instead of a separate keyboard 144, the phone 14 is equipped with a touch display screen (not represented) that incorporates a virtual keyboard that is displayed.

The phone 14 is preferably further provided with a loudspeaker and a microphone, as MMI.

The phone 14 has a first antenna 146 that allows communicating, Over The Air (or OTA), via a Long Range (or LR) Radio-Frequency (or RF) bi-directional link 17, through a network(s) (not represented), with the server 18.

The network(s) may include one or several cellular (tele)communication networks, like a Global System for Mobile Communications (or GSM), a General Packet Radio Service (or GPRS), a Universal Mobile Telecommunications System (or UMTS), an EDGE (acronym for "Enhanced Data Rates for GSM Evolution"), a Code Division Multiple Access (or CDMA), and/or a Long Term Evolution (or LTE) type network(s).

Such a cellular communication network set is not exhaustive but only for exemplifying purposes.

The phone 14 includes a second antenna (not represented), so as to exchange in a CTL manner.

The phone 14 includes one or several microprocessors (not represented), as data processing means, volatile and non-volatile memories (not represented), as means for storing data, and one or several I/O interfaces (not represented) linked together through a data and control bus (not represented).

The microprocessor processes and controls data within the phone 14 and/or data to be exchanged with outside of the phone 14. The microprocessor controls and communicates with all the components of the phone 14, such as the I/O interfaces.

The phone 14 memories store data notably relating to an OS and applications supported by the phone 14.

The phone 14 memories may be constituted by one or several EEPROMs (acronym for "Electrically Erasable Programmable Read-Only Memory"), one or several ROMs (acronym for "Read Only Memory"), one or several Flash memories, and/or any other memories of different types, like one or several RAMs (acronym for "Random Access Memory").

The phone 14 memory (or the SE1 memory or the SE2 memory) stores preferably a Uniform Resource Identifier (or URI), like a Uniform Resource Locator (or URL) and/or an Internet Protocol (or IP) type address or the like, as an identifier(s) relating to the server 18 to be addressed.

The server identifier(s) is(are) used by the phone 14, acting as a client device, for transferring to the server 18 notably a signed first public key K1 pub, i.e. the first public key K1 pub accompanied with its signature, as a first signature and a result originating from a first signature generation application, as a second application supported by the SE2 16 (as will be explained infra).

Additionally, the phone 14 memory stores an International Mobile Equipment Identity (or IMEI) and/or an email address, as an identifier(s) relating to the phone 14.

The SE2 16 belongs to the phone 14 user and is issued by an authority, like e.g. a government.

The SE2 16 includes an antenna (not represented), so as to exchange in a CTL manner.

The SE2 16 includes one (or several) microprocessor(s) 162, as data processing means, one (or several) memory(ies) 164, as data storing means, and one (or several) I/O interface(s) 166 that are internally all connected, through an internal bidirectional data bus 163, to each other.

The I/O interface(s) 166 allow(s) communicating data from the internal chip components to the chip exterior and conversely.

The microprocessor(s) 162 processe(s), control(s) and communicate(s) internally data with all the other components incorporated within the SE2 16 and, through the I/O interface(s) 166, with the chip exterior.

The memory 164 may have either been pre-provisioned, during the SE2 personalization (i.e. preferably at the end of its manufacturing process) and/or after the SE2 issuance upon a preferably secure load or download, as an SE2 post-issuance personalization, with at least one second private key denoted K2pr or dynamically generated the second private key K2pr, as a second user credential.

Likewise, the memory 164 may have either been pre-provisioned, during the SE2 personalization (i.e. preferably at the end of its manufacturing process) and/or after the SE2 issuance upon a preferably secure load or download, as an SE2 post-issuance personalization, with at least one corresponding second public key denoted K2pub or dynamically generated the second public key K2pub.

According to an essential feature of the invention, the memory 164 stores the second public key K2pub that is associated with the second private K2pr. The second private key K2pr and the associated second public key K2pub constitute a second asymmetric key-pair.

The (or each) microprocessor 162 executes an OS and one or several applications.

The microprocessor 162 executes an invention first signature generation application, as a second application.

The second application is configured to carry out a (digital) signature by using the first public key K1 pub, as data to be signed, and the second private key K2pr, as a signature key.

A first signature algorithm may be e.g. a River Shamir and Adleman (or RSA) or ElliptiC Curve (or ECC) type algorithm, that is used for signing the first public key K1 pub.

The first public key K1 pub, as data to be signed and a message M, may be a message digest that represents a fingerprint of the data to be signed. The fingerprint may be a result of a hash function, like e.g. SHA-2.

Alternatively, instead of being supported by the SE2 16, the second application is supported either by the SE1 12 or the phone 14.

The microprocessor 162 may execute, in a preferred manner, one or several security applications.

The security applications include preferably a user authentication process to be used prior to accessing the memory 164. To authenticate successfully the user, the user has to provide a PIN, biometric data and/or the like, as user reference authentication data that is securely stored within the memory 164, that has to match the user reference authentication data.

The SE2 16 is preferably able to send, at its own initiative, through the phone 14, to any device connected to the phone 14, a proactive command for sending, for instance, to the server 18 the first public key and a corresponding first signature, as a result of an execution of the second application.

An execution of the second application is preferably configured to be triggered when receiving a request for signing the first public key K1pub, as the first user credential. Such a request may include information about the first user credential, as a second user credential. The information may include user data.

The user data may include a first name, a last name, a birth date, a personal picture(s), a user identifier, a mail address of the user, a telephone number of the user, an email address of the user, a Session Initiation Protocol (or SIP) address of the user, a telecopy number of the user, a key(s) Ki associated with the user identifier, a PIN(s), a biometrics print(s) and/or other appropriate data.

The SE2 16 memory stores preferably a certificate denoted Cert1 relating to a second public key K2pub.

As known per se, a certificate links a public key to an identity under a responsibility of an authority.

The authority relating to the Cert1 may be a government and/or any other official state organism, like e.g. a municipality, a department, a region and/or a state.

Cert1 is a number that includes the second public key K2pub and a corresponding signature that is generated by using the authority private key. The certificate is preferably used by the mobile 12 by adding it into a message to be sent. The message to be sent includes data to be signed and an intermediary result to be used by the server 16, so as to further generate a corresponding final result, as a complete signature.

The SE2 16 is connected, through a bi-directional CTL link 15, to the phone 14.

The server 18 is connected, through a bi-directional wireless link 17, over the network, to the phone 14.

The server 18 may be operated by a Mobile Network Operator, as an MNO or a Mobile Virtual Network Operator (or MVNO), a bank operator, a service provider or on its behalf.

The server 18 is integrated within an entity of a system, as a back-end OTA or Over-The-Internet (or OTI) system.

The server 18 is hosted by a computer with data processing means and data storing means.

The server 18 supports a signature verification application.

To verify the first signature S1, the server 18 analyses whether the following predetermined mathematical formula, as one example, is satisfied:

$$S1^{v} \bmod m = M;$$

in which:

- S1 represents the first signature;
- mod denotes the modulo function;
- (v, m) represents a couple of parameters relating to the second public key K2pub in which v is a public exponent and m represents the RSA type modulus; and
- M denotes data to be signed and that accompanies the first signature S1.

Once the result S1 is generated, the server 18 raises the result S1 to the power of v (mod m) to get a resulting value. Then, the server 18 compares the resulting value to the received message M, as data to be signed. Only when the resulting value matches the received message M, the server 18 validates the first signature S1.

Alternatively, instead of verifying the signature, when the server 18 does receive neither the first public key, as data to be signed nor a corresponding digest (of the data to be signed), the server 18 verifies that a data structure relating to the first signature is correct.

The server 18 is identified preferably by data retrieved from either the phone 14 or the token memory.

The server 18, as addressee of information to be sent over the phone 14, may be identified by a Uniform Resource Identifier (or URI), like an Uniform Resource Locator (or URL), a call phone number of a server, a video-conference call phone number of a server, an Internet address and/or an email address of a server relating to a service provider, as server identifier(s).

The server 18 is able to validate (or not) that the first signature S1 is correct.

The server 18 is connected, through a bi-directional wire link 19, to the CA 110.

A memory accessible from the CA 110 stores a CA public key Kcapub that is associated with a CA private Kcapr. The CA private key Kcapr and the associated CA public key Kcapub constitute an asymmetric key-pair.

As known per se, the CA 110 issues a certificate that includes a signature of the thus certified data by using the CA private key Kcapr. The resulting signature may be verified by using the CA public key Kcapub that is accessible.

**Figure 2** depicts an exemplary embodiment of a message flow 20 that involves the SE1 12, the SE2 16, the server 18 and the CA 110 to produce a certificate, when applicable.

It is assumed that the phone 14 exchanges with the server 18 by using e.g. HyperText Transfer Protocol (or HTTP) and/or Short Message Service (or SMS) type messages. However, any other data communication protocol between the phone 14 and the server 18, like e.g. a secured data communication protocol (securing in confidentiality and/or in integrity the data thus exchanged) Transport Layer Security (or TLS) protocol, may be used additionally to the HTTP and/or SMS protocol(s).

Firstly, the SE2 16 (and more exactly the second application) sends to the SE1 12 (and more exactly the first application) a request 22 for getting a Derived (user) Credential (or DC).

Preferably, the request 22 includes Cert1, as a certificate, and data relating to the second private key K2pr, so as to certify it. The Cert1 may include data allowing a user credential derivation, like e.g. a second public key reference and/or user data.

Preferably, the SE1 12 user authenticates successfully to accept to issue the first public key K1 pub. If the SE1 12 refuses to issue K1 pub, i.e. the user does not enter user reference authentication data, then the SE1 12 aborts (not represented) a thus requested operation.

The SE1 12 gets the first public key K1 pub, as first user credential.

Then, the SE1 12 sends to the SE2 16 a message 24 including the first public key.

The SE2 16 then generates 26, as a result, a corresponding first signature S1 by using the second private key, as the signing key, the first public key, as data to be signed, and the first signature algorithm.

The SE2 16 sends to the server 18 a message 28 including the first public key, as signed data, and the first signature S1.

Optionally, the message 28 further includes Cert1. The server 18 verifies whether the Cert1 has or has not been revoked, i.e. is valid or not. Only if the Cert1 has not been revoked, the server 18 continues an execution of the launched signature verification application. Otherwise, i.e. if the Cert1 has been revoked, the server 18 aborts such an execution.

Then, the server 16 verifies 210 whether the first signature S1 is or is not valid.

If the received S1 does not match a corresponding expected S1, then the server 18 does not send any data and terminates 212 the launched process. Then, the server 18 may carry out (not represented) one or several actions.

Otherwise, i.e. if the received S1 does match a corresponding expected S1, the server 18 sends to the CA 110 a message 214 including the first public key and a certificate request, like e.g. a Certificate Signing Request (or CSR), relating to the first user credential, as a derived credential.

Then, the CA 110 generates 216 Cert2, as a certificate, that includes a second signature S2.

To generate the Cert2, the CA 110 signs the received data by using the CA private key Kcapr and gets a second signature S2, as a result.

According to an alternative, instead of signing the first public key, as received data, the CA 110 signs the first signature. Thus, the second signature S2 constitutes a signature of the first signature S1.

Cert2 is used for certifying the Derived (user) Credential.

Cert2 may include the first signature S1 and the second signature S2 in an extension field of a X509 type format certificate, since a X509 type format certificate includes only one single signature. Such an extension may be marked, so as to verify that the concerned certificate is valid.

**Figure 3** shows an exemplary embodiment of a two resulting trust chains.

A national root CA 32 certifies a CA 34 relating to the SE2 16.

The CA 34 relating to the SE2 16 certifies the SE2 16, so as to terminate a trust chain 320.

If the CA 34 relating to the SE2 16 is revoked, then the SE2 16 is revoked and the SE1 12 is also revoked.

The SE2 16 certifies the SE1 12 thanks to the invention generated cryptography based link 314, as another trust chain 340.

The CA 110 certifies the SE1 12, as another trust chain 330.

Another CA represented), like e.g. the SE2 16, certifies the CA 110.

The two trust chains 320 and 330 are independent. In other words, a revocation of the trust chain 320 does not affect any element of the other trust chain 330.

Such an invention certificate generation operation allows generating a certificate relating to a Derived Credential (or DC) by using the phone 14 as if the SE2 that owns the (original) credential has been used.

The invention certificate operation needs two cryptographic operations, namely, at the client side, a first cryptographic operation between the first and second user credentials, and, at the server side, a second cryptographic operation that is dependent on the result of the first cryptographic operation.

The invention certificate operation is secure since the CA is not able to produce a corresponding certificate without the involvement of the SE2 16, as a second device and signature generation device.

The invention solution allows providing, in a seamless, quick and secure manner, a certificate.

The embodiment that has just been described is not intended to limit the scope of the concerned invention. Other embodiments may be given. As another embodiment example, a Registration Authority (or RA) may be used as a signature verification entity.

**Claims**

1. A method (20) for associating two credentials relating to a user,
   **characterized in that**, a first device (14) accessing a first application (12), the first application accessing a first private key, as a first user credential, the method comprises the following steps:

   - the first application gets a corresponding first public key;
   - the first application sends to a second application (16) a message (24) including the first public key;
   - the second application signs (26) the first public key by using a second private key, as a second user credential, a result being a first signature;

- the second application sends to a signature verification entity a first message (28) including the first public key and the first signature;
- the signature verification entity accessing a second public key associated with the second private key, the signature verification entity verifies (210) whether the first signature is or is not valid;
- only if the first signature is valid, then the signature verification entity sends to a certificate authority a second message (214) including a corresponding certificate request relating to the first user credential; and
- the certificate authority generates (216) a certificate relating to the first user credential.

**2.** Method according to claim 1, wherein, prior to getting the first public key, the first application receives a request for getting a derived user credential.

**3.** Method according to claim 2, wherein the request for getting a derived user credential includes data relating to the second user credential.

**4.** Method according to any of claims 1 to 3, wherein, prior to signing the first public key and/or sending the first message, the second application authenticates successfully a user of a device storing the second application.

**5.** Method according to any of claims 1 to 4, wherein, the second application being stored within a second device, prior to verifying the first signature, the method further comprises the following step in which a first server sends to the second device data to be presented, through the second device or another device connected or coupled to the second device, to a user of the second device and to be submitted, through the first device, by a user of the first device to the first server, as a Proof Of Possession of the first device.

**6.** Method according to claim 5, wherein the second device includes a user terminal or a secure element.

**7.** Method according to any of claims 1 to 6, wherein, to generate the certificate, the certificate authority signs at least the first public key by using a certificate authority private key, a result being a second signature.

**8.** Method according to claim 7, wherein the second signature constitutes a signature relating to the first signature.

**9.** A device for associating two credentials relating to a user,
**characterized in that**, the device comprising means for storing a second application, the second application is configured:

- to receive from a first application a message including a first public key, as a first user credential;
- to sign the first public key by using a second private key, as a second user credential, a result being a first signature;
- to send to a signature verification entity a first message including the first public key and the first signature.

**10.** A device according to claim 9, wherein the device includes a secure element.

**Fig. 1**

**Fig. 2**

**Fig. 3**

Europäisches
Patentamt

European
Patent Office

Office européen
des brevets

# EUROPEAN SEARCH REPORT

Application Number

EP 14 30 7227

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/049681 A1 (HERREWEGHEN ELSIE VAN [CH]) 25 April 2002 (2002-04-25) * abstract; figures 1-6 * * paragraphs [0026] - [0029] * * paragraphs [0034] - [0037] * | 1-10 | INV. H04L29/06 H04L9/32 |
| X | US 2007/055881 A1 (FUCHS KENNETH C [US] ET AL) 8 March 2007 (2007-03-08) | 9,10 | |
| A | * abstract; figures 1, 2, 5 * * paragraphs [0015], [0022], [0023] * | 1-8 | |
| X | WO 2005/043807 A1 (CERTICOM CORP [CA]; BROWN DANIEL R [CA]) 12 May 2005 (2005-05-12) * abstract; figures 1, 2, 3 * * paragraphs [0025] - [0030] * * paragraph [0054] * | 1-10 | |
| A | SANGRAM RAY ET AL: "Design of Mobile-PKI for using mobile phones in various applications", RECENT TRENDS IN INFORMATION SYSTEMS (RETIS), 2011 INTERNATIONAL CONFERENCE ON, IEEE, 21 December 2011 (2011-12-21), pages 297-302, XP032112567, DOI: 10.1109/RETIS.2011.6146885 ISBN: 978-1-4577-0790-2 * abstract; figure 2 * * sections I, III * | 1-10 | TECHNICAL FIELDS SEARCHED (IPC) H04L H04W G06F |

The present search report has been drawn up for all claims

| Place of search | Date of completion of the search | Examiner |
|---|---|---|
| Munich | 8 July 2015 | Schossmaier, Klaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 30 7227

This annex lists the patent family members relating to the patent documents cited in the above-mentioned European search report.
The members are as contained in the European Patent Office EDP file on
The European Patent Office is in no way liable for these particulars which are merely given for the purpose of information.

08-07-2015

| Patent document cited in search report | | | Publication date | Patent family member(s) | | | Publication date |
|---|---|---|---|---|---|---|---|
| US 2002049681 | A1 | | 25-04-2002 | NONE | | | |
| US 2007055881 | A1 | | 08-03-2007 | US | 2007055881 | A1 | 08-03-2007 |
| | | | | WO | 2007030213 | A2 | 15-03-2007 |
| WO 2005043807 | A1 | | 12-05-2005 | CA | 2543796 | A1 | 12-05-2005 |
| | | | | CN | 1902853 | A | 24-01-2007 |
| | | | | CN | 102868528 | A | 09-01-2013 |
| | | | | EP | 1687931 | A1 | 09-08-2006 |
| | | | | JP | 4741503 | B2 | 03-08-2011 |
| | | | | JP | 5468157 | B2 | 09-04-2014 |
| | | | | JP | 5497677 | B2 | 21-05-2014 |
| | | | | JP | 2007510336 | A | 19-04-2007 |
| | | | | JP | 2011091868 | A | 06-05-2011 |
| | | | | JP | 2013140402 | A | 18-07-2013 |
| | | | | US | 2005135606 | A1 | 23-06-2005 |
| | | | | US | 2013013916 | A1 | 10-01-2013 |
| | | | | US | 2014325227 | A1 | 30-10-2014 |
| | | | | WO | 2005043807 | A1 | 12-05-2005 |

EPO FORM P0459

For more details about this annex : see Official Journal of the European Patent Office, No. 12/82